# EUROPÄISCHE PATENTSCHRIFT

(11) **EP 4 424 453 B1**
(45) Veröffentlichungstag und Bekanntmachung des Hinweises auf die Patenterteilung: **01.10.2025**
(21) Anmeldenummer: 24154690.2
(22) Anmeldetag: 30.01.2024
(51) Int. Cl.: B23K 26/242, B23K 26/244, B23K 26/26, F16B 5/08, H01R 4/02, H01R 13/02, H01H 1/58, B23K 101/38, B23K 103/10, B23K 103/12, H01R 43/02, H01R 4/62, H01R 43/16

(54) **VERBUNDANORDNUNG MIT ZUMINDEST EINEM DEHNUNGSBAND UND VERFAHREN ZUR HERSTELLUNG DER VERBUNDANORDNUNG**
COMPOSITE ASSEMBLY WITH AT LEAST ONE EXPANSION STRIP AND METHOD FOR PRODUCING THE COMPOSITE ASSEMBLY
ENSEMBLE COMPOSITE COMPRENANT AU MOINS UNE BANDE D'ÉTIREMENT ET PROCÉDÉ DE FABRICATION DE L'ENSEMBLE COMPOSITE

(30) Priorität: 02.03.2023 DE 102023000758
(43) Veröffentlichungstag der Anmeldung: 04.09.2024
(73) Patentinhaber: Mercedes-Benz Group AG, 70372 Stuttgart (DE)
(72) Erfinder: STEFFENS, Dirk, 71384 Weinstadt (DE); KAISER, Mauricio, 70374 Stuttgart (DE)
(74) Vertreter: Novagraaf Group

(56) Entgegenhaltungen:
- EP-B1- 0 897 183
- DE-A1- 102009 000 262
- DE-A1- 102022 004 752

## Beschreibung

Die Erfindung betrifft eine Verbundanordnung mit zumindest einem Dehnungsband, welches eine Anzahl von Metallbändern umfasst. Weiterhin betrifft die Erfindung ein Verfahren zur Herstellung einer solchen Verbundanordnung.

Aus der DE 10 2020 120 263 B3 ist ein Verfahren zum Verschweißen von metallischen Folien bekannt. Das Verfahren umfasst die Verfahrensschritte: Bilden eines Parallelstoßes mit mehreren zu verbindenden metallischen Folien, indem die Folien so angeordnet werden, dass sie breitflächig aneinander liegen und die Stirnseiten der gestapelten Folien eine Stirnseite des Parallelstoßes bilden, Verschweißen der metallischen Folien, indem ein Laserstrahl auf die Stirnseite des Parallelstoßes der Folien gerichtet wird, so dass eine die Folien verbindende Schweißnaht gebildet wird.

Darüber hinaus beschreibt die DE 10 2014 223 352 A1 eine Verbindungsanordnung. Die Verbindungsanordnung umfasst einen Halbleiter, ein Substrat und ein Metallband. Der Halbleiter weist einen elektrischen Anschluss auf, welcher mittels des Metallbandes mit dem Substrat ultraschallverschweißt ist, wobei das Metallband zwei Metallschichten aus zueinander verschiedenen Metallen oder Metall-Legierungen aufweist. Dabei beträgt eine Dickenerstreckung der mit dem Anschluss verbundenen Metallschicht des Metallbandes die Hälfte einer Dickenerstreckung der mit der Metallschicht verbundenen weiteren Metallschicht der Metallschichten.

Die Patentanmeldung DE 10 2009 000 262 A1 offenbart ein thermisches Fügeverfahren zum Herstellen einer stoffschlüssigen Verbindung zwischen wenigstens zwei Flächen eines oder mehrerer Werkstücke mittels wenigstens einer Fügenaht, bei dem wenigstens ein Zusatzwerkstoff verwendet wird, wobei wenigstens einer der Zusatzwerkstoffe bereits vor dem Fügen auf wenigstens ein Werkstück aufgebracht wird.

Die Patentanmeldung DE 10 2005 001 606 A1 offenbart ein Verfahren zum Zusammenfügen zumindest eines ersten Bleches und eines zweiten Bleches mittels Laserschweißen, die zumindest teilweise aufeinander geschichtet werden, so dass sie einen Überlappungsbereich bilden, wobei die Bleche nach dem Aufeinanderschichten im Überlappungsbereich entlang einer Pendellinie miteinander verschweißt werden.

Die Übersetzung der europäischen Patentschrift DE 603 12 323 T2 offenbart ein Verfahren zum Laser-Lichtbogen-Hybridschweißen von mehreren zu schweißenden Metallstücken unter Verwendung von wenigstens einem Laserstrahl und wenigstens einem Lichtbogen, wobei die Metallstücke in einer Mehrfach-Dicken-Anordnung übereinander geschichtet sind und wobei der Laserstrahl und der Lichtbogen die Mehrfach-Dicken-Anordnung kanten-schweißen.

Die DE 10 2022 004 752 A1 offenbart eine Bauteilanordnung zur elektrischen Kontaktierung mit zumindest einem Dehnungsband und einem Bauteil, wobei das Dehnungsband eine Anzahl von übereinander angeordneten endseitig pressverschweißten Metallbändern umfasst. Erfindungsgemäß ist vorgesehen, dass- das pressverschweißte Ende des Dehnungsbandes eine Fase aufweist und im Überlappstoß auf dem Bauteil angeordnet ist und- das pressverschweißte Ende des Dehnungsbandes mittels einer Kehlnaht, welche einen Pressschweißbereich des Dehnungsbandes zumindest bereichsweise überlagert, mit dem Bauteil laserverschweißt ist. Weiterhin betrifft die Erfindung ein Verfahren zur Herstellung einer solchen Bauteilanordnung.

Die DE 10 2009 000 262 A1 offenbart ein thermisches Fügeverfahren zum Herstellen einer stoffschlüssigen Verbindung zwischen wenigstens zwei Flächen eines oder mehrerer Werkstücke mittels wenigstens einer Fügenaht, bei dem wenigstens ein Zusatzwerkstoff verwendet wird, wobei wenigstens einer der Zusatzwerkstoffe bereits vor dem Fügen auf wenigstens ein Werkstück aufgebracht wird.

Das Patent EP 0 897 183 B1 offenbart eine Hochstrom-Schaltvorrichtung, die zwei an Stromleiter anzuschließende Kontaktplatten, wenigstens einen an einer der Kontaktplatten angebrachten, bewegbar gelagerten Schaltfinger und an den Schaltfingern und der anderen Kontaktplatte angeordnete Kontakte aufweist. Jeder Schaltfinger ist über ein Dehnungsband mit der einen Kontaktplatte verbunden und ist mit einem die beim Schalten auftretenden mechanischen Belastungen aufnehmenden Gehäuse versehen, in welches das Dehnungsband hineinragt und sich in dem Gehäuse bis zu dem Kontakt des Schaltfingers erstreckt.

Der Erfindung liegt die Aufgabe zugrunde, eine Verbundanordnung mit zumindest einem Dehnungsband und ein Verfahren zur Herstellung einer solchen Verbundanordnung anzugeben.

Die Aufgabe wird erfindungsgemäß gelöst durch eine Bauteilanordnung, welche die in Anspruch 1 angegebenen Merkmale aufweist, und durch ein Verfahren, welches die in Anspruch 3 angegebenen Merkmale aufweist.

Vorteilhafte Ausgestaltungen der Erfindung sind Gegenstand des Unteranspruchs.

Eine Verbundanordnung mit zumindest einem Dehnungsband umfasst eine Anzahl von Metallbändern. Erfindungsgemäß ist vorgesehen, dass
- die Metallbänder mit zumindest einem jeweiligen Ende mit einem vorgegebenen Stufenversatz treppenartig übereinanderliegend angeordnet sind, wobei der vorgegebene Stufenversatz um ein vorgegebenes Maß größer ist als eine Höhe des jeweiligen Metallbandes,
- Schweißnähte entlang der Stufen zu verbindender Metallbänder als Kehlnähte ausgeführt sind und
- Kehlnähte unmittelbar benachbarter Stufen sich zur Bildung einer Gesamtschweißung zum Verbinden der Metallbänder jeweils abschnittsweise überlappen.

Darüber hinaus betrifft die Erfindung ein Verfahren zu Herstellung einer solchen Verbundanordnung.

Bei einer derart ausgebildeten Verbundanordnung ist ein vergleichsweise geringer Energieeintrag in Bezug auf ein Einbringen der als Kehlnähte ausgeführten Schweißnähte erforderlich. Zudem kann ein Materialverzug durch die stufenförmige Anordnung der Metallbänder und einem nacheinander folgenden Abfahren zum Einbringen der Schweißnähte verringert werden. Aufgrund des nacheinander folgenden Verschweißens der Metallbänder kann eine Anlagentechnik, insbesondere eine Laserstrahlquelle, geringer dimensioniert werden, wodurch Anschaffungskosten für eine Anlagentechnik verringert werden können.

Dadurch, dass die Verbundanordnung den Stufenversatz aufweist, tritt eine erheblich geringere Schweißnahtüberhöhung gegenüber herkömmlicher Fügeverfahren, insbesondere Schweißverfahren, auf.

Aus dem mehrmaligen Überschweißen, also der Überlappung der Kehlnähte, resultiert eine erhöhte Prozesssicherheit und somit ein geringerer Ausschuss. Ein Reparaturverfahren kann analog zu dem Verfahren zur Herstellung der Verbundanordnung mittels einfachen Überschweißens erfolgen.

Mittels der Verbundanordnung ist ein Generieren eines vergrößerten Anbindungsquerschnittes sowie ein überlagertes Verschweißen möglich, wodurch eine Stromtragfähigkeit optimiert werden kann.

Die Metallbänder können als Einzelteile vorab stoffschlüssig miteinander verbunden werden oder als Verbundanordnung direkt mit einem zu fügenden Bauteil verschweißt werden.

Ein Temperatureintrag in die Verbundanordnung kann bei Einbringen der Schweißnähte durch Pausen gesteuert werden, so dass insbesondere temperaturempfindliche Bauteile miteinander verbunden werden können.

Eine derartige Verbundanordnung eignet sich insbesondere für eine Leistungselektronik eines Fahrzeuges, insbesondere für zu fügende Bauteile aus Kupfer und/oder Aluminium.

Darüber hinaus ist durch die Anordnung der Metallbänder mit Stufenversatz ein optimierter Toleranzausgleich möglich.

Weiterhin ergeben sich durch eine derartige Verbundanordnung der Metallbänder neue Gestaltungsmöglichkeiten, wobei eine geringere Vorbehandlung der einzelnen Metallbänder hinsichtlich eines Grates erforderlich ist, da bei dieser Verbundanordnung ein Grat am Ende eines jeweiligen Metallbandes nicht zu einer Spaltbildung führt.

Ausführungsbeispiele der Erfindung werden im Folgenden anhand von Zeichnungen näher erläutert.

Dabei zeigen:
- Fig. 1: schematisch eine perspektivische Ansicht eines Ausschnittes eines Stapels von Metallbändern,
- Fig. 2: schematisch eine perspektivische Ansicht des Ausschnittes des Stapels von Metallbändern bei einem thermischen Fügen und einen vergrößerten Ausschnitt,
- Fig. 3: schematisch eine perspektivische Ansicht einer alternativen Ausführung eines Stapels von Metallbändern bei einem thermischen Fügen und einen vergrößerten Ausschnitt.

Einander entsprechende Teile sind in allen Figuren mit den gleichen Bezugszeichen versehen.

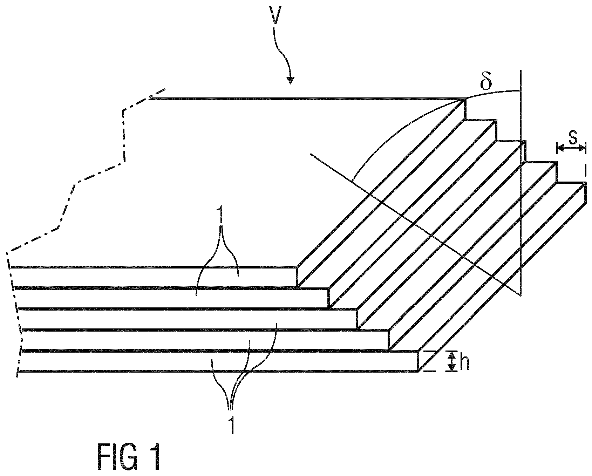

Figur 1 zeigt eine perspektivische Ansicht eines Ausschnittes übereinander angeordneter Metallbänder 1, welche zur Bildung eines Dehnungsbandes thermisch gefügt werden sollen.

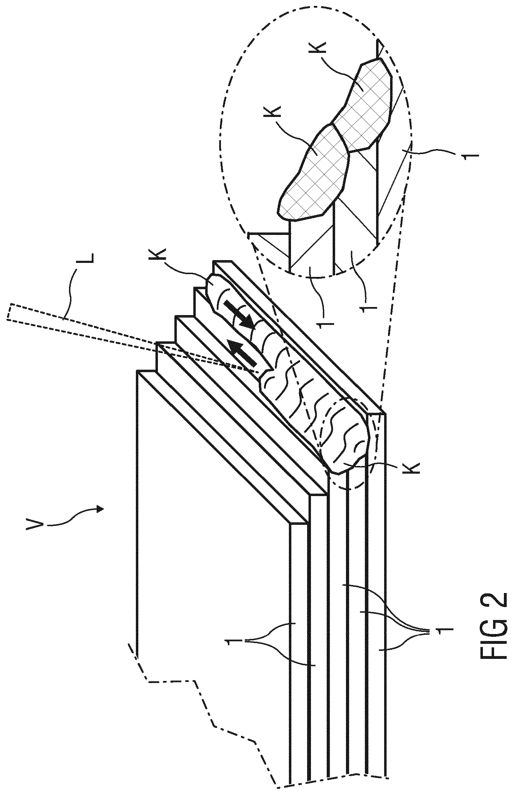

Figur 2 zeigt eine perspektivische Ansicht des Ausschnittes eines Stapels der übereinander angeordneten Metallbänder 1 bei einem thermischen Fügen und einen vergrößerten Ausschnitt thermisch gefügter Metallbänder 1.

Ein Dehnungsband stellt eine flexible Stromschiene aus vergleichsweise dünnen paketierten Metallbändern 1, sogenannten Einzelfolien, aus Kupfer und/oder Aluminium dar und weist nicht näher gezeigte, verhältnismäßig massive Anschlüsse auf. Insbesondere sind die Metallbänder 1 eines herkömmlichen Dehnungsbandes pressgeschweißt und zur Kontaktierung mittels Schraubverbindung ausgebildet.

Insbesondere werden pressgeschweißte Dehnungsbänder zum elektrischen Kontaktieren von Bauteilen mit unterschiedlichem Höhenniveau eingesetzt. Dabei findet die Kontaktierung dieser vorgefertigten Teile über Schraubverbindungen statt, welche einerseits einen vergrößerten Platzbedarf erfordern sowie andererseits gegenüber der Stromschiene einen erhöhten Übergangswiderstand im Betrieb des Dehnungsbandes aufweisen.

Im Folgenden werden eine Verbundanordnung V und ein Verfahren zur Herstellung der Verbundanordnung V beschrieben, wobei ein thermisches Fügen der Metallbänder 1 mittels eines Schweißverfahrens, insbesondere eines Schmelzschweißverfahrens, realisiert wird.

Dabei sieht das Verfahren vor, dass die Metallbänder 1 treppenartig aufeinanderliegend angeordnet werden, wobei ein Stufenversatz s um ein vorgegebenes Maß größer ist als eine Höhe h eines jeweiligen Metallbandes 1. Die Höhe h des jeweiligen Metallbandes 1 bildet gleichzeitig eine Materialstärke des Metallbandes 1, wobei die Metallbänder 1 im Wesentlichen die gleiche Höhe h aufweisen, die gleich oder größer 0,01 mm und gleich oder kleiner 2,00 mm ist.

Der Stufenversatz s ist insbesondere derart gewählt, dass dieser einem Produkt aus der Höhe h des jeweiligen Metallbandes 1 multipliziert mit 0,15 entspricht.

Durch diesen Stufenversatz s sind die Metallbänder 1 treppenartig aufeinanderliegend angeordnet, so dass ausgehend von einer Senkrechten und einer an den Stirnseiten der Metallbänder 1 gedachten Linie ein Winkel δ aufgespannt ist, welcher größer ist als 45°. Der Winkel δ entspricht einer sogenannten Treppensteigung, wobei der Winkel δ auch als Steigungswinkel bezeichnet werden kann.

Sind die Metallbänder 1, wie oben beschrieben, mit dem Stufenversatz s aufeinanderliegend angeordnet, wird ein Eckbereich je Stufe zwischen zwei Metallbändern 1 mittels eines Laserstrahles L aufgeschmolzen, wobei eine Schweißnaht als Kehlnaht K eingebracht wird.

Entweder beginnt das Einbringen der Kehlnaht K in einem Eckbereich der untersten Stufen oder in einem Eckbereich der obersten Stufen, wobei die Kehlnaht K nacheinander in den nächsten Eckbereich der übereinanderliegenden Metallbänder 1 eingebracht wird.

Gemäß dem in Figur 2 gezeigten Ausführungsbeispiel beginnt das Einbringen der Kehlnaht K rechts unten und endet links unten, wobei das Einbringen der Kehlnaht K in einem nächsten Eckbereich zwei mit Stufenversatz s übereinander angeordneter Metallbänder 1 links beginnt und rechts endet. Eine nächste Kehlnaht K wird dann wieder von links nach rechts in einen nächsten Eckbereich eingebracht.

Bei einem Aufschmelzen der jeweils nächsten Stufe wird die jeweils zuvor erzeugte Kehlnaht K nochmals partiell aufgeschmolzen, so dass eine Gesamtschweißung über die Stufen der übereinander angeordneten Metallbänder 1 erzeugt wird. Das heißt, dass sich die Kehlnähte K zur Erzeugung der Gesamtschweißung zumindest teilweise überlappen.

Die einzelnen Kehlnähte K können linear abgefahren werden oder zur Verbreiterung der Überlappung jeweils mit einer Strahloszillation überlagert werden.

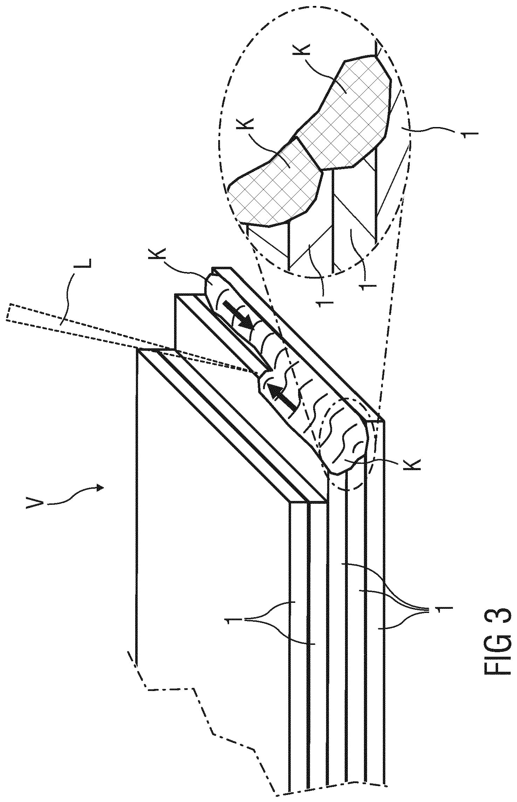

Figur 3 zeigt eine alternative Ausführung eines Stapels übereinander angeordneter Metallbänder 1, das heißt eine alternative Ausführung der Verbundanordnung V.

Bei dieser in Figur 3 gezeigten Ausführung sind jeweils zwei Metallbänder 1 flächenbündig aufeinander angeordnet. Dabei ist ein Stufenversatz s zwischen jeweils zwei Paaren flächenbündig aufeinander angeordneter Metallbänder 1 ausgebildet.

Dabei ist der Stufenversatz s größer/gleich einer zweifachen Höhe h eines Metallbandes 1.

## Patentansprüche

1. Verbundanordnung (V) mit zumindest einem Dehnungsband, welches eine Anzahl von Metallbändern (1) umfasst,
**dadurch gekennzeichnet, dass**
- die Metallbänder (1) mit zumindest einem jeweiligen Ende mit einem vorgegebenen Stufenversatz (s) treppenartig übereinanderliegend angeordnet sind, wobei der vorgegebene Stufenversatz (s) um ein vorgegebenes Maß größer ist als eine Höhe (h) des jeweiligen Metallbandes (1),
- Schweißnähte entlang der Stufen zu verbindender Metallbänder (1) als Kehlnähte (K) ausgeführt sind und
- Kehlnähte (K) unmittelbar benachbarter Stufen sich zur Bildung einer Gesamtschweißung zum Verbinden der Metallbänder (1) jeweils abschnittsweise überlappen.

2. Verbundanordnung (V) nach Anspruch 1,
**dadurch gekennzeichnet, dass** Enden zumindest zwei unmittelbar aufeinanderliegender Metallbänder (1) eine Stufe bilden.

3. Verfahren zur Herstellung einer Verbundanordnung (V) nach Anspruch 1,
**dadurch gekennzeichnet, dass**
- die Metallbänder (1) mit jeweils zumindest einem Ende mit einem vorgegebenen Stufenversatz (s), welcher um ein vorgegebenes Maß größer ist als eine Höhe (h) des jeweiligen Metallbandes (1), treppenartig übereinanderliegend angeordnet werden,
- Schweißnähte entlang der Stufen der zu verbindenden Metallbänder (1) als Kehlnähte (K) erzeugt werden und
- die Kehlnähte (K) unmittelbar benachbarter Stufen derart in die Metallbänder (1) erzeugt werden, dass diese sich zur Bildung einer Gesamtschweißung jeweils abschnittsweise überlappen.

## Claims

1. Composite assembly (V) having at least one expansion strip which comprises a number of metal strips (1),
**characterized in that**
- the metal strips (1) are arranged one above the other in a stepped manner, with at least one end having a predetermined step offset (s), the predetermined step offset (s) being greater by a predetermined amount than a height (h) of the relevant metal strip (1),
- weld seams along the steps of metal strips (1) to be joined are designed as fillet welds (K) and
- fillet welds (K) of immediately adjacent steps overlap in portions to form an overall weld for connecting the metal strips (1).

2. Composite assembly (V) according to claim 1,
**characterized in that** ends of at least two directly adjacent metal strips (1) form a step.

3. Method for producing a composite assembly (V) according to claim 1,
**characterized in that**
- the metal strips (1) are arranged one above the other in a stepped manner, each with at least one end having a predetermined step offset (s) which is greater by a predetermined amount than a height (h) of the respective metal strip (1),
- weld seams along the steps of metal strips (1) to be joined are designed as fillet welds (K) and
- the fillet welds (K) of directly adjacent steps are produced in the metal strips (1) such that they overlap in portions to form an overall weld.

## Revendications

1. Agencement composite (V) comportant au moins une bande d'extension qui comprend un certain nombre de bandes métalliques (1),
**caractérisé en ce que**
- les bandes métalliques (1) sont disposées, avec au moins une extrémité respective, les unes au-dessus des autres à la manière d'un escalier avec un décalage de marches (s) prédéfini, dans lequel le décalage de marches (s) prédéfini est supérieur d'une mesure prédéfinie à une hauteur (h) de la bande métallique (1) respective,
- des soudures le long des marches de bandes métalliques (1) à relier sont réalisées sous forme de soudures d'angle (K) et
- des soudures d'angle (K) de marches directement voisines se chevauchent respectivement dans certaines sections pour former une soudure globale pour la liaison des bandes métalliques (1).

2. Agencement composite (V) selon la revendication 1,
**caractérisé en ce que** des extrémités d'au moins deux bandes métalliques (1) directement superposées forment une marche.

3. Procédé pour la fabrication d'un agencement composite (V) selon la revendication 1,
**caractérisé en ce que**
- les bandes métalliques (1) sont disposées, avec respectivement au moins une extrémité, les unes au-dessus des autres à la manière d'un escalier avec un décalage de marches (s) prédéfini qui est supérieur d'une mesure prédéfinie à une hauteur (h) de la bande métallique (1) respective,
- des soudures le long des marches des bandes métalliques (1) à relier sont produites sous forme de soudures d'angle (K) et
- les soudures d'angle (K) de marches directement voisines sont produites dans les bandes métalliques (1) de telle sorte que lesdites soudures d'angle se chevauchent respectivement dans certaines sections pour former une soudure globale.
